# EUROPEAN PATENT SPECIFICATION

(11) **EP 3 687 353 B1**
(45) Date of publication and mention of the grant of the patent: **20.10.2021**
(21) Application number: 18786550.6
(22) Date of filing: 25.09.2018
(51) Int. Cl.: A47J 37/12

(54) **HIGH LIMIT RTD HOLDER BLOCK**
RTD-HALTEBLOCK MIT HOHEM GRENZWERT
BLOC DE MAINTIEN RTD À LIMITE ÉLEVÉE

(30) Priority: 25.09.2017 US 201762562673 P
(43) Date of publication of application: 05.08.2020
(73) Proprietor: Henny Penny Corporation, Eaton, OH 45320 (US)
(72) Inventor: GOGEL, Mark, Richmond IN 47374 (US); FLORKEY, Edward, J., Vandalia OH 45377 (US); DOMI, Sabrina, Kettering OH 45440 (US); STASKO, Issac, Olmsted Township OH 44138 (US); PEREIRA, Adrian Jason, Dayton , OH 45409 (US)
(74) Representative: Schlotter, Alexander Carolus Paul
(86) International application number: PCT/US2018/052592
(87) International publication number: WO 2019/060880

(56) References cited:
- EP-A1- 1 228 731
- EP-A1- 1 329 181
- WO-A1-2012/152675
- KR-B1- 101 412 577
- US-A1- 2005 194 372
- US-B1- 9 386 881

## Description

### TECHNICAL FIELD

The invention generally relates to fryers and, more particularly, to systems and methods for monitoring the cooking medium temperature and controlling a heater of the fryer to improve temperature management of the cooking medium.

### BACKGROUND

Oil-based frying is commonly used as a cooking method for a wide range of food, such as poultry, fish, and potato products. Commercial fryers include one or more fry pots that are filled with a cooking medium such as oil or solid fats. Heat is provided to the cooking medium using a heater, which typically includes an electrical heating element submerged in the cooking medium or a gas burner thermally coupled to the cooking medium through the walls of the fry pot. When the cooking medium reaches a preset cooking temperature, food products are placed into the cooking medium for a predetermined amount of time during which the food products are cooked by heat from the cooking medium. To facilitate insertion and removal of the food product, the food product is typically placed inside a container, such as a wire basket, and the container is lowered into the cooking medium for the predetermined amount of time.

Fryers typically include an electronic controller that controls the temperature of the cooking medium by adjusting the output of the heater. To this end, the controller monitors the temperature of the cooking medium and adjusts the output of the heater in response to the temperature of the cooking medium varying from a temperature set-point. If the cooking medium becomes too hot, it may begin to break down, releasing free radicals and substances that can give the food products an undesirable flavor. To prevent the cooking medium from being over-heated, the fryer may also include a high limit temperature module configured to deactivate the heater in response to the temperature of the cooking medium exceeding a maximum allowable temperature.

High limit temperature modules have a hard trip temperature that is set to prevent the temperature of the cooking medium from ever exceeding the maximum temperature. In response to detecting that the temperature of the cooking medium has exceeded the hard trip temperature, the high limit temperature module cuts power to the heater. The high limit temperature module must then be reset by the operator to resume operation of the fryer after the temperature of the cooking medium has dropped to a suitable level. This need to reset the high limit module can result in significant down time for the fryer. Current systems and methods of operating high limit temperature modules provide a narrow range of operation between the typical cooking temperature and the hard trip temperature. This frequently results in undesirable "nuisance trips," e.g., tripping of the module during cook cycles even though the temperature of the cooking medium is safely below the accepted level. A contributing factor to this problem is the imprecision with which the temperature of the cooking medium is measured. In this regard, conventional high limit temperature modules rely on high limit temperature sensors, such as thermocouples or resistance temperature detectors (RTD's), typically arranged to measure either the temperature of the cooking medium or the direct temperature of the heater elements (these values typically differ). Such methods of temperature measurement can lead to inaccurate readings and reduce the precision with which the high limit temperature module operates.

Thus, there is a need for improved systems and methods for monitoring cooking medium temperature and/or controlling heaters of fryers to prevent the temperature of the cooking medium from exceeding the maximum temperature, while avoiding nuisance trips.

### SUMMARY

The present invention provides a holder block according to claim 1 for retaining a temperature sensor in a cooking apparatus, a cooking apparatus according to claim 10 comprising the holder block and a method according to claim 14 of controlling a temperature in a cooking apparatus comprising clamping the holder block retaining a temperature sensor over first and second heating elements.

In one embodiment, a holder block for retaining a temperature sensor in a cooking apparatus includes a base portion including a bottom central member and first and second legs extending from opposite sides of the bottom central member. The bottom central member includes a lower channel and a bottom probe groove configured to operatively engage at least a portion of the temperature sensor. The first and second legs include first and second bottom element grooves, respectively, each configured to operatively engage at least a portion of first and second heating elements, respectively. The holder block also includes a cap portion removably attachable to the base portion and including a top central member and first and second arms extending from opposite sides of the top central member, the top central member including an upper channel and a top probe groove configured to operatively engage at least a portion of the temperature sensor and located opposite the bottom probe groove, the first and second arms including first and second top element grooves located opposite the first and second bottom element grooves, respectively, each configured to operatively engage at least a portion of the first and second heating elements, respectively. The base portion and cap portion are moveable relative to each other such that movement of the base portion and cap portion toward each other provides a first clamping action on the first heating element via the first top and bottom element grooves, a second clamping action on the second heating element via the second top and bottom element grooves, and a third clamping action on the temperature sensor via the top and bottom probe grooves. In one embodiment, the base portion and cap portion are configured to provide a plurality of conductive thermal paths between the first and second heating elements and the temperature sensor. In addition or alternatively, the lower and/or upper channels define a plurality of apertures configured to provide a plurality of convective thermal paths between the first and second heating elements and the temperature sensor through a cooking medium. The upper and lower channels may be configured to collectively define a passageway for receiving at least a portion of the temperature sensor.

In one embodiment, the bottom probe groove is centered along a width of the bottom central member. In addition or alternatively, the top probe groove is centered along a width of the top central member. The top central member may be shorter than the bottom central member. In one embodiment, the bottom probe groove and/or top probe groove is configured to position the temperature sensor ¼ inch from the first and/or second heating element. In addition or alternatively, the top probe groove is configured to position the temperature sensor ¼ · 25,4 mm from a top surface of the cap portion.

In another embodiment, a holder block for retaining a temperature sensor in a cooking apparatus containing a cooking medium includes a base portion configured to operatively engage at least a lower portion of the temperature sensor and configured to operatively engage at least a lower portion of at least one heating element. The holder block also includes a cap portion removably attachable to the base portion, the cap portion being configured to operatively engage at least an upper portion of the temperature sensor and configured to operatively engage at least an upper portion of the at least one heating element. The base portion and cap portion are moveable relative to each other such that movement of the base portion and cap portion toward each other provides a first clamping action on the at least one heating element and a second clamping action on the temperature sensor to define a clamped position of the holder block. When in the clamped position, the base portion and cap portion provide a plurality of conductive thermal paths between the at least one heating element and the temperature sensor and define a plurality of apertures providing a plurality of convective thermal paths between the at least one heating element and the temperature sensor through the cooking medium. In one embodiment, the base portion includes a T-shaped profile. In addition or alternatively, the cap portion includes a truncated T-shaped profile.

In yet another embodiment, a cooking apparatus includes a fry pot, first and second heating elements configured to heat a cooking medium in the fry pot, and the holder block described above clamped over the first and second heating elements. The cooking apparatus also includes a high limit temperature sensor including a sensing element retained by the holder block and that provides a signal indicative of a temperature in the fry pot. The cooking apparatus further includes a high limit module configured to selectively decouple the first and second heating elements from an energy source in response to the signal indicating the temperature has exceeded a threshold temperature defining a hard trip condition. And the cooking apparatus includes a controller configured to selectively regulate the first and second heating elements in response to the signal indicating the temperature is approaching the threshold temperature. In one embodiment, the sensing element is positioned to sense a temperature greater than an actual temperature of the cooking medium. For example, the sensing element may be positioned to sense a temperature between [(40-32) · 5/9]°C and [(50-32) · 5/9]°C greater than the actual temperature of the cooking medium. In one embodiment, the sensing element is positioned ¼ · 25,4 mm from the first and/or second heating element. In addition or alternatively, the sensing element is positioned ¼ · 25,4 mm from a top surface of the cap portion.

In another embodiment, a method of controlling a temperature in a cooking apparatus includes clamping a holder block retaining a temperature sensor over first and second heating elements of the cooking apparatus and sensing, via the temperature sensor, a sensed temperature resulting from heat transfer from a cooking medium in the cooking apparatus and from each of the first and second heating elements. The method also includes comparing the sensed temperature to a threshold temperature. The method further includes, in response to the sensed temperature being equal to or greater than the threshold temperature, deactivating the first and second heating elements. And the method includes, in response to the sensed temperature approaching the threshold temperature, regulating at least one of the first or second heating elements. In one embodiment, sensing the sensed temperature includes providing conductive thermal paths to a sensing element of the temperature sensor. In addition or alternatively, sensing the sensed temperature includes providing convective thermal paths to a sensing element of the temperature sensor.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a perspective view of a fryer according to an embodiment of the invention.
FIG. 2 is a partial perspective view of the heating elements positioned within one of the fry pots of the fryer of FIG. 1, and also showing an exemplary high limit temperature probe holder.
FIG. 3 is an exploded view of the high limit temperature probe holder of FIG. 2 and a high limit temperature probe.
FIG. 4 is a perspective view of the high limit temperature probe holder of FIG. 2, showing the high limit temperature probe clamped over the high limit temperature probe.
FIG. 5 is a front cross sectional view of the high limit temperature probe holder of FIG. 4, taken along section line 5-5.

### DETAILED DESCRIPTION

Embodiments of the invention are directed to systems and methods of controlling a fryer and, more particularly, to systems and methods of controlling a heater that heats a cooking medium in a fry pot of the fryer. The heater is controlled to prevent both overheating of the cooking medium, damage to the fryer, and automatic shutdowns due to the temperature of the cooking medium exceeding a maximum allowable temperature.

A controller monitors signals received from at least one high limit temperature probe (also referred to as "high limit probe") and, based on this temperature data, the controller determines if a high limit temperature module (also referred to as "high limit module") is approaching a hard trip condition. In this regard, the high limit temperature probe is positioned to detect an optimum amount of heat transfer from the cooking medium and from one or more heating elements of the fryer, such that the high limit temperature probe detects a sensed temperature greater than the actual temperature of the oil. If the controller determines the high limit module is approaching the hard trip condition, it preemptively adjusts the output of the heater to avoid the hard trip condition. The controller may thereby prevent the high limit temperature module from detecting a hard trip condition. This may prevent the down time that typically results from the reset procedure required for the high limit temperature module each time the hard trip condition occurs.

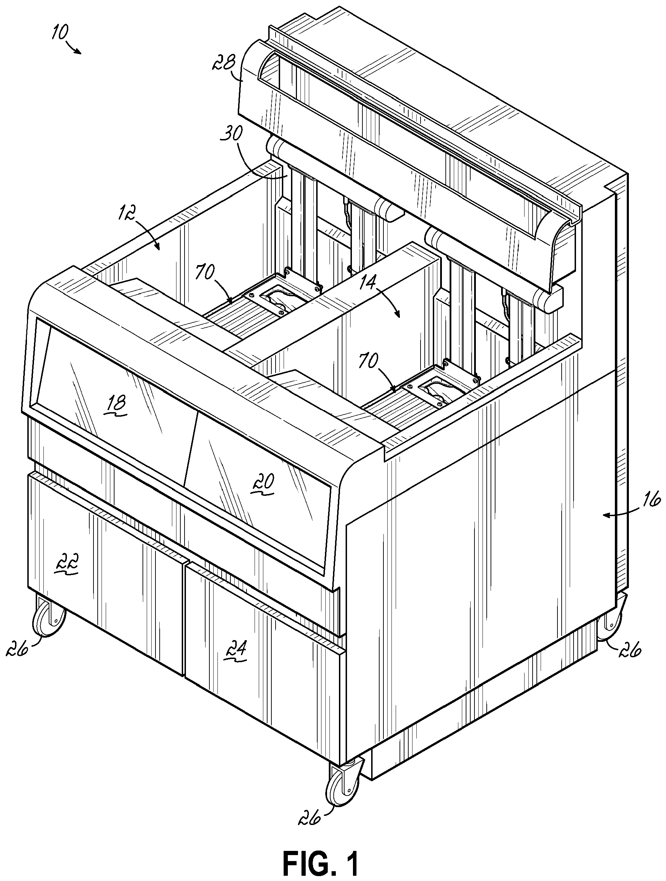

Referring now to the figures, FIG. 1 depicts an exemplary fryer 10 in accordance with an embodiment of the invention. The fryer 10 includes fry pots 12, 14, a cabinet 16, control panels 18, 20, access panels 22, 24, wheels 26, a basket hanger 28, and a backsplash 30. Each of the fry pots 12, 14, cabinet 16, access panels 22, 24, basket hanger 28, and backsplash 30 may be constructed from stainless steel, mild steel, or some other suitable material. Various features and/or components of the fryer 10 may be similar to those described in Applicant's own U.S. Provisional Application Serial No. 62/507,945, filed on May 18, 2017, and titled "Heating Element Controller for Oil Based Fryer,".

A food product may be placed into the fry pots 12, 14, for example, by lowering a basket containing the food product into the fry pot 12, 14. At completion of a cooking cycle, the basket may be removed from the fry pot 12, 14 and hung from the basket hanger 28 to allow excess cooking medium to drain back into the fry pot 12, 14. Each of the fry pots 12, 14 may be associated with a corresponding one of the control panels 18, 20 to provide a human-machine interface for operating the fryer 10. The control panels 18, 20 may receive commands from an operator of the fryer, and display information regarding a status of the fryer 10 to the operator. The access panels 22, 24 may provide access to the interior of cabinet 16 to service the components of the fryer 10, for example.

Exemplary fryer 10 is depicted as having a separate control panel 18, 20 for each fry pot 12, 14. However, it should be understood that one control panel could be configured to control multiple fry pots, and embodiments of the invention are not limited to fryers having a separate control panel for each fry pot. In addition, although the fryer 10 depicted in FIG. 1 is an electrically-heated open fryer having two fry pots 12, 14, it should be further understood that embodiments of the invention may also be used with many other designs and types of cooking devices, including pressure fryers and/or gas-heated fryers, as well as fryers having a different number of fry pots.

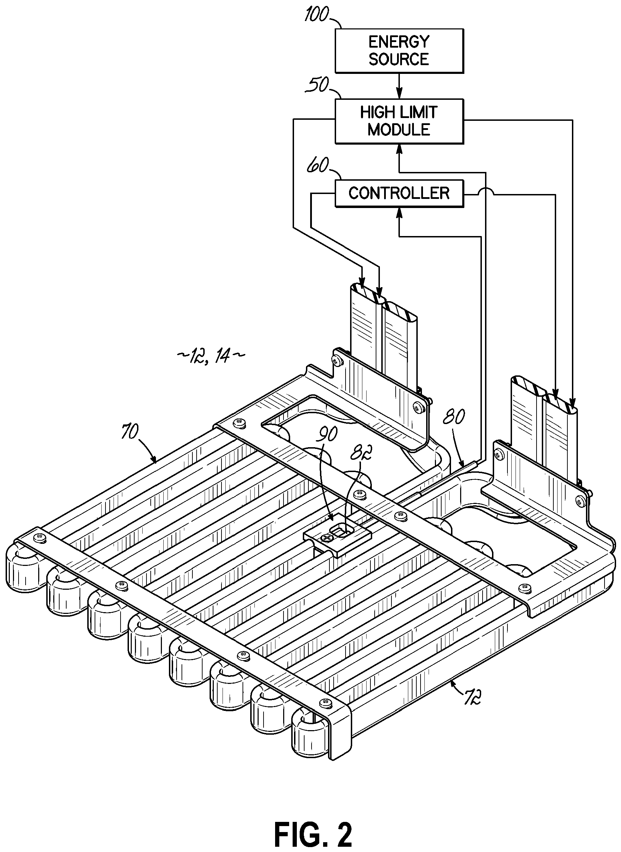

Referring now to FIG. 2, in addition to fry pots 12, 14, the fryer 10 may include a high limit module 50 and a controller 60. Each fry pot 12, 14 may include first and second heating elements 70, 72 and a high limit temperature probe 80 such as an RTD including a sensing element 82, and may be at least partially filled with a cooking medium such as oil (not shown). The heating elements 70, 72 provide heat energy to the cooking medium and therefore are typically at a higher temperature than the cooking medium. Each probe 80 may be coupled to the heating elements 70, 72 by a respective holder block or holder 90 and configured so that the corresponding sensing element 82 is in contact with some of the cooking medium under normal operating conditions. Each of the heating elements 70, 72 may be coupled to an energy source 100 (e.g., a source of electricity or fuel) by the high limit module 50. The high limit module 50 may be in communication with the high limit temperature probe 80 and configured to interrupt the supply of electric power to the heating elements 70, 72 in response to detecting a high limit trip condition. The high limit module 50 may thereby provide a mechanism for interrupting power to the heating elements 70, 72 that is independent of the controller 60.

As shown, the high limit temperature probe 80 may also be in communication with the controller 60. The controller 60, in turn, may be in communication with one or more of the heating elements 70, 72 and/or various other components of the fryer 10, and may control the various cooking and maintenance cycles of the fryer 10 by transmitting signals to, and receiving signals from, these components of the fryer 10. The controller 60 may also be coupled to the control panels 18, 20 to provide operating information to, and receive input from, the operator of the fryer 10. The controller 60 may control the temperature of the cooking medium in each fry pot 12, 14 by selectively activating or otherwise controlling the output of the respective heating element 70, 72, among other functions such as, for example, controlling the filtering and/or addition of cooking oil.

In the embodiment shown in Fig. 2, the high limit temperature probe 80 is located proximate to one or more heating elements 70, 72. Signals from the high limit temperature probe 80 may be used by the high limit module 50 to determine if power should be cut to the heating elements 70, 72 to avoid burning the cooking medium and/or damaging the fryer 10. These signals may also be used by the controller 60 to determine when the heating elements 70, 72 should be adjusted and/or deactivated to avoid generating a hard trip condition in the fryer 10.

The temperature probes 80 may each have a certain amount of effective thermal coupling to one or more heating elements 70, 72 and/or to the cooking medium. For example, a temperature probe 80 may be thermally coupled to the heating elements 70, 72 by the holder 90 that supports the temperature probe 80. The amount of effective thermal coupling between each probe 80 and the heating element(s) 70, 72 to which it is coupled by its holder 90 may be determined by the characteristics of the respective holder 90. For example, the use of materials having a high thermal conductivity in the holder 90 may produce a strong thermal coupling between the temperature probe 80 and the heating element(s) 70, 72 to which the holder 90 is attached. In this regard, components of the holder 90 may provide conductive thermal paths from the heating element(s) 70, 72 to the temperature probe 80. In addition or alternatively, convective thermal paths from the heating element(s) 70, 72 to the temperature probe 80 through voids in the holder 90 may be established to produce a strong thermal coupling with the cooking medium. The proximity of the temperature probe 80 to the respective heating element(s) 70, 72 as a result of the configuration of the holder 90 may also affect the amount of effective thermal coupling. Thus, the thermal coupling between each probe 80 and the cooking medium and/or the heating element(s) 70, 72 to which it is attached by its respective holder 90 may be configured to produce a specific relationship between a temperature of the heating element(s) 70, 72, a temperature of the cooking medium, and a sensed temperature detected by the probe 80, which is generally between the other two temperatures based on the effective thermal coupling to both the cooking medium and the heating elements 70, 72.

The high limit temperature probe 80, and the control processes that use signals received from this probe 80, may be configured to provide consistent temperatures and to balance the thermal energy in the heating element(s) 70, 72 with the thermal energy in the cooking medium. In other words, the temperature probe holder 90 may be configured to balance the heat received by the sensing element 82 from the heating element(s) 70, 72 and the heat received from contact with the cooking medium such that the sensed temperature is substantially greater than the actual temperature of the cooking medium, as discussed in greater detail below. In this regard, the probe holder 90 of the high limit temperature probe 80 may be configured to position the sensing element 82 of the probe 80 securely and precisely with respect to the heating element(s) 70, 72.

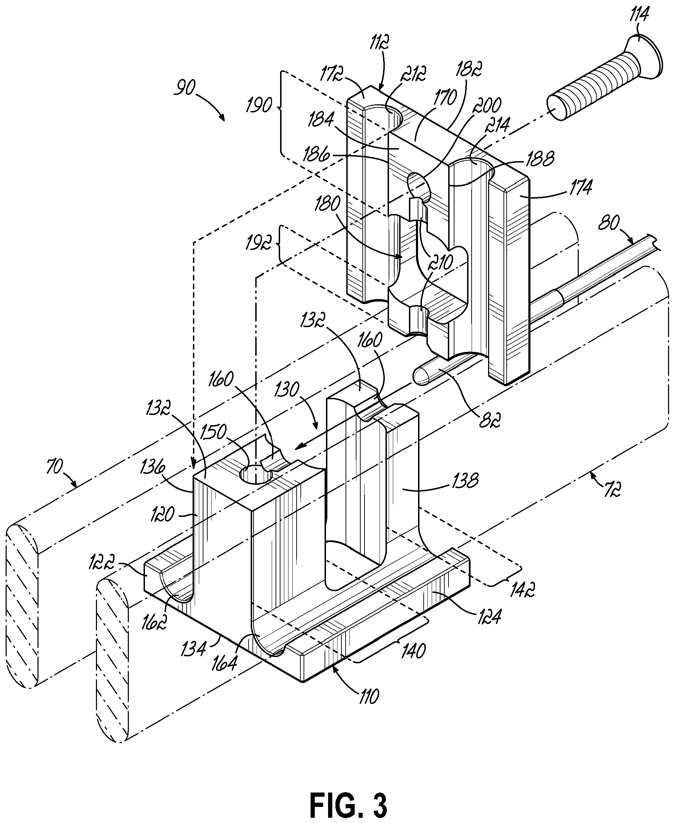

Referring now to FIG. 3, each temperature probe holder 90 is configured to hold the corresponding probe 80 in place within the corresponding fry pot 12, 14. For example, each temperature probe holder 90 may be configured to clamp onto one or more heating elements 70, 72 and also sandwich the probe 80 in a fixed position. In this regard, each holder 90 may include a base portion 110 and a cap portion 112 coupled together by at least one fastener, such as a threaded screw 114.

As shown, the base portion 110 may have a generally T-shaped profile and may include an elongate bottom central member 120 and first and second legs 122, 124 extending from opposite sides of the bottom central member 120. The bottom central member 120 may have a width approximately equal to or slightly less than a distance between adjacent heating elements 70, 72 of the fry pot 12, 14 such that the bottom central member 120 may be positioned therebetween. As shown, a lower channel 130 is provided through the bottom central member 120 and may extend the height of the base portion 110 from a top surface 132 thereof to a bottom surface 134 thereof, and may extend the width of the bottom central member 120 from a first side 136 thereof to a second side 138 thereof to bifurcate the bottom central member 120 into front and rear sections 140, 142. A bore 150 extends through the front section 140 of the bottom central member 120 from the top surface 132 and may be threaded (not shown) for threadably receiving the screw 114. A bottom probe groove 160 longitudinally extends across the top surface 132 of the bottom central member 120 along a path which traverses the rear section 142, spans the lower channel 130 (e.g., the lower channel 130 interrupts the bottom probe groove 160), and terminates at or near the bore 150 on the front section 140. As shown, the bottom probe groove 160 may be substantially centered along the width of the base portion 110 for reasons discussed below. In any event, the bottom probe groove 160 is configured to operatively engage at least a portion of the high limit temperature probe 80. For example, the bottom probe groove 160 may be sized and shaped (e.g., contoured) to generally complement a surface of at least a portion of the high limit temperature probe 80. In this regard, the cap portion 112 is highly similar in construction to the base portion 110.

The first and second legs 122, 124 include first and second bottom element grooves 162, 164, respectively, each longitudinally extending the length of the base portion 110 and configured to operatively engage at least a portion of one or more heating elements 70, 72. For example, the first bottom element groove 164 may be sized and shaped (e.g., contoured) to generally complement a surface of at least a portion of the first heating element 70, and the second bottom element groove 164 may be sized and shaped (e.g., contoured) to generally complement a surface of at least a portion of the second heating element 72.

As shown, the cap portion 112 may have a generally truncated T-shaped profile and may include an elongate top central member 170 and first and second arms 172, 174 extending from opposite sides of the top central member 170. The top central member 170 may have a width approximately equal to or slightly less than a distance between adjacent heating elements 70, 72 of the fry pot 12, 14 such that the top central member 170 may be positioned therebetween. In the embodiment shown, the top central member 170 is relatively shorter in height than the bottom central member 120 of the base portion 110. An upper channel 180 is provided through the top central member 170 and may extend the height of the cap portion 112 from a top surface 182 thereof to a bottom surface 184 thereof, and may extend the width of the top central member 170 from a first side 186 thereof to a second side 188 thereof to bifurcate the top central member 170 into front and rear sections 190, 192. As shown, the upper channel 180 may be sized, shaped, and positioned for alignment with the lower channel 130 of the base portion 110. A hole 200 extends through the front section 190 from the top surface 182 to the bottom surface 184 for receiving the screw 114 and may be sized and positioned for alignment with the bore 150 of the base portion 110 to facilitate coupling of the cap portion 112 to the base portion 110 via the screw 114. A top probe groove 210 longitudinally extends across the bottom surface 184 of the top central member 170 along a path which traverses the rear section 192, spans the upper channel 180 (e.g., the upper channel 180 interrupts the top probe groove 210), and terminates at or near the hole 200 on the front section 190. As shown, the top probe groove 210 may be substantially centered along the width of the cap portion 112 for alignment with the bottom probe groove 160. The top probe groove 210 is configured to operatively engage at least a portion of the high limit temperature probe 80. For example, the top probe groove 210 may be sized and shaped (e.g., contoured) to generally complement a surface of at least a portion of the high limit temperature probe 80.

The first and second arms 172, 174 include first and second top element grooves 212, 214, respectively, each longitudinally extending the length of the cap portion 112 for alignment with the first and second bottom element grooves 162, 164, and configured to operatively engage at least a portion of one or more heating elements 70, 72. For example, the first top element groove 212 may be sized and shaped (e.g., contoured) to generally complement a surface of at least a portion of the first heating element 70, and the second top element groove 214 may be sized and shaped (e.g., contoured) to generally complement a surface of at least a portion of the second heating element 72.

When the cap portion 112 is positioned over and aligned with the base portion 110 for clamping, the top surface 132 of the bottom central member 120 is located opposite the bottom surface 184 of the top central member 170, the top probe groove 210 is located opposite the bottom probe groove 160, and the first and second top element grooves 212, 214 are located opposite the first and second bottom element grooves 162, 164, respectively. The cap portion 112 is movable relative to the base portion 110 such that the top probe groove 210 is movable relative to the bottom probe groove 160 and the first and second top element grooves 212, 214 are movable relative to the respective bottom element grooves 162, 164. In this manner, the top and bottom probe grooves 210, 160 may provide a clamping action on the high limit temperature probe 80 positioned therebetween, and the top and bottom element grooves 212, 214, 162, 164 may provide a clamping action on one or more heating elements 70, 72 positioned therebetween. For example, advancing the screw 114 in the bore 150 of the base portion 110 moves the top probe groove 210 toward the bottom probe groove 160 and the top element grooves 212, 214 toward the respective bottom element grooves 162, 164. The screw 114 may be tightened to form a secure and tight connection between the high limit temperature probe 80, the heating element(s) 70, 72, and the holder 90. It will be appreciated that other clamping or securing elements may be used to tighten the engagement of the base portion 110 and the cap portion 112 in other embodiments.

It will be appreciated that the high limit temperature probe 80 may be clamped at multiple locations on the holder 90. For example, the high limit temperature probe 80 may be clamped by the portions of the top and bottom probe grooves 210, 160 residing on the rear sections 192, 142 of the central members 170, 120 of the cap and base portions 112, 110, respectively, and may also be clamped by the portions of the top and bottom probe grooves 210, 160 residing on the front sections 190, 140 of the central members 170, 120 of the cap and base portions 112, 110, respectively, such as proximate the screw 114. The particular shape and contour of the probe grooves 210, 160 will dictate how and where clamping action occurs on the high limit temperature probe 80.

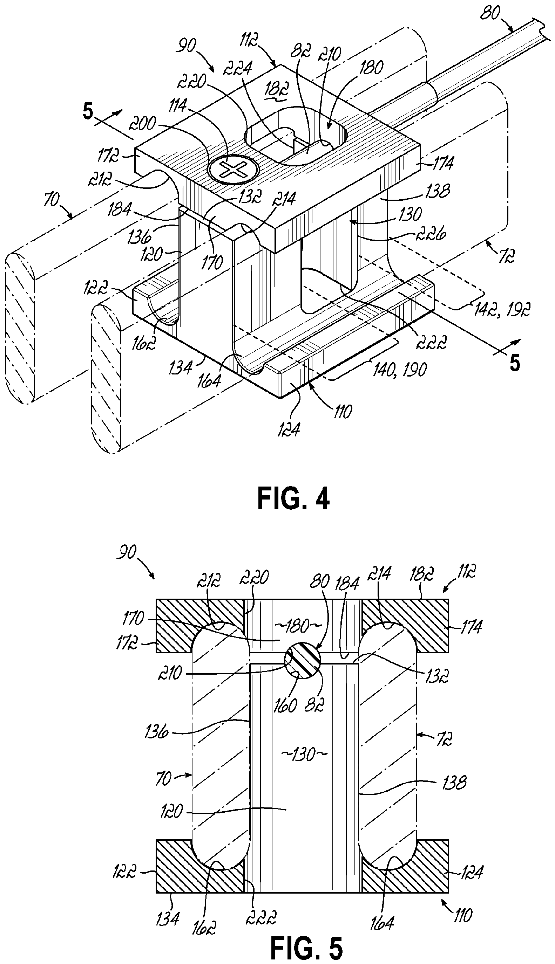

With reference now to FIGS. 4 and 5, when the holder 90 is clamped over the high limit temperature probe 80 and one or more heating elements 70, 72, the sensing element 82 of the high limit temperature probe 80 resides at least partially in a generally continuous passageway through the assembled holder 90 provided by the lower and upper channels 130, 180. While the cap and bottom portions 112, 110 pull heat from the heating elements 70, 72 and conduct such heat to the sensing element 82 of the high limit temperature probe 80, the lower and/or upper channels 130, 180 define top, bottom, and first and second side apertures 220, 222, 224, 226 which allow convective thermal entry to the passageway and thus provide a convective thermal path to the sensing element 82. In this manner, one or more of the apertures 220, 222, 224, 226 allow the cooking medium to flow across the sensing element 82 so that the sensing element 82 may absorb heat from the cooking medium in the fry pot 12, 14, which is at a lower temperature than the heating elements 70, 72. Thus, the temperature of the cooking medium may have a cooling effect on the sensed temperature relative to the actual temperature of the heating elements 70, 72. In this manner, the apertures 220, 222, 224, 226 may promote a balanced temperature reading that is less than the temperature of the heating elements 70, 72 and greater than the temperature of the cooking medium.

In this regard, it will be appreciated that the sensed temperature at the high limit temperature probe 80 is not based solely on either the actual temperature of the heating elements 70, 72 or the actual temperature of the cooking medium. Rather, the sensed temperature results from heat transfer from both the cooking medium and from the heating element(s) 70, 72, and thus may be considered a hybrid of the temperature of the heating elements 70, 72 and the actual temperature of the cooking medium. Therefore, while the sensed temperature does not directly represent the actual temperature of the cooking medium, the sensed temperature is closely related to and may be indicative of trends in the actual temperature of the cooking medium.

As shown, the top surface 132 of the bottom central member 120 may not contact the bottom surface 184 of the top central member 170. Alternatively, the top surface 132 of the bottom central member 120 may contact the bottom surface 184 of the top central member 170, depending on the dimensions of the probe 80 and/or heating element(s) 70, 72. In any event, the outer periphery of the holder 90 in its assembled state may be generally cube-shaped. For example, the length, width, and height of the assembled holder 90 may each be substantially the same dimension. For example, the length, width, and/or height may be approximately 1 · 25,4 mm.

As best shown in FIG. 5, the sensing element 82 of the high limit temperature probe 80 is generally centered between the heating elements 70, 72, by virtue of the probe grooves 160, 210 being centrally positioned along the width of the respective portion 110, 112. For example, the sensing element 82 may be positioned approximately ¼ · 25,4 mm from each of the heating elements 70, 72. This may allow the sensed temperature to be substantially equally influenced by both heating elements 70, 72 and/or may prevent the sensed temperature from being dominated by either heating element 70, 72. In this regard, the first and second sides 136, 138 of the bottom central member 120 may abut the first and second heating elements 70, 72 to promote equal spacing of the heating elements 70, 72 from the sensing element 82. Alternatively, the sensing element 82 may be positioned relative to the heating elements 70, 72 in various other configurations. For example, the sensing element 82 may be positioned closer to either heating element 70, 72 relative to the other heating element 70, 72. In another embodiment, the sensing element 82 may be positioned on an outer side of an outermost heating element, such that the sensing element 82 is not between two heating elements. For example, the holder 90 may be configured to clamp over a single heating element.

In the embodiment shown, the sensing element 82 is located proximate upper portions of the heating elements 70, 72, by virtue of the top central member 170 being shorter than the bottom central member 120. This may allow the sensed temperature to be more heavily influenced by the temperature of the cooking medium (e.g., via the top aperture 220) than if the sensing element 82 were located proximate middle portions of the heating elements 70, 72, where the effect of the heating elements 70, 72 on the sensed temperature would be greater and may overpower the effect of the cooking medium. For example, the sensing element 82 may be positioned approximately ¼ · 25,4 mm from the top surface 182 of the cap portion 112. Alternatively, the sensing element 82 may be located proximate middle portions of the heating elements 70, 72. For example, the bottom central member 120 may be shorter than that shown and/or the top central member 170 may have a height approximately equal to that of the bottom central member 120. It will also be appreciated that, while the cap portion 112 is shown being positioned above the base portion 110, the arrangement may be switched such that the cap portion 112 is positioned below the base portion 110. In any event, by positioning the sensing element 82 so as to balance the heat received from the heating elements 70, 72 and from the cooking medium, the holder 90 allows the high limit temperature probe 80 to detect a temperature indicative of an imminent high limit condition prior to that condition actually occurring, enabling the controller 60 to take preventative action and avoid a high trip/nuisance trip.

To that end, embodiments of the invention may monitor the temperature of the high limit temperature probe 80, and incorporate the temperature readings obtained therefrom into one or more processes executed by the controller 60. For example, by comparing the temperature readings (e.g., one or more sensed temperatures) provided by the high limit temperature probe 80 with one or more condition parameters (e.g., the sensed temperature being greater than or equal to a predetermined temperature threshold, such as [(425-32) · 5/9]°C), the controller 60 can determine when the high limit module 50 is getting close to a hard trip. In response to this determination, the controller 60 may regulate the heating element(s) 70, 72 accordingly to avoid entering the hard trip state. For example, the controller 60 may deactivate and/or decrease the output of the heating element(s) 70, 72. In this regard, the positioning of the sensing element 82 as a result of the configuration of the holder 90 may cause the sensed temperature to be substantially greater than the actual temperature of the cooking medium. For example, the sensed temperature may be between approximately [(40-32) · 5/9]°C and approximately [(50-32) · 5/9]°C greater than the actual temperature of the cooking medium. As such, when the sensed temperature reaches the exemplary threshold of [(425-32) · 5/9]°C, the temperature of the cooking medium may be only between approximately [(375-32) . 5/9]°C and approximately [(385-32) . 5/9]°C, while the actual temperature of the heating element(s) 70, 72 may be greater than [(425-32) · 5/9]°C such as, for example, [(525-32) · 5/9]°C. Thus, the sensed temperature being at the threshold temperature may indicate that the cooking medium has not yet reached the threshold temperature but may be approaching the threshold temperature.

Advantageously, the improved control provided by embodiments of the invention may reduce the amount of down time for the fryer 10 due to "nuisance tripping" of the high limit module 50 by recognizing the existence of an imminent high limit trip condition. A high limit trip may cause the high limit module 50 to cut off the supply of gas or electricity to the heating elements 70, 72. As initially described above, to use the fryer 10 after a high limit trip condition, the operator may be required to manually reset the high limit module 50 after waiting for the temperature detected by the high limit temperature probe 80 to fall below a predetermined threshold. By positioning the sensing element 82 to detect a sensed temperature that is a hybrid of the temperatures of the heating elements 70, 72 and the cooking medium and by regulating the output of the heating elements 70, 72 using the sensed temperature, embodiments of the invention may reduce the output of the heating elements 70, 72 before the high limit trip condition is reached. This may save the operator the time and effort of resetting the fryer 10, and prevent associated food production delays caused by nuisance trips.

The processes executed by the controller 60 to control the heating elements 70, 72 may be configured to take into account heat transfer characteristics of the heating elements 70, 72 and temperature dependent flow characteristics of the cooking medium. For example, the material from which the fry pot 12, 14 is made may have a continuous use temperature (e.g., [(800-32) · 5/9]°C) above which the fry pot 12, 14 should not be operated for an extended time. Thus, the control processes may be configured to limit the temperatures of the material of the fry pot 12, 14 to less than the continuous use temperature. In addition or alternatively, the high limit temperature control processes and/or high limit module 50 may be configured to prevent cooking medium temperatures from exceeding a maximum allowable temperature, e.g., [(446-32) · 5/9]°C outside of the United States and [(475-32) · 5/9]°C within the United States. The use of signals from the high limit probe 80 may allow the controller 60 to maximize the temperature of the cooking medium while protecting the fryer operator from cooking delays and interruptions.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, actions, steps, operations, elements, and/or components, but do not preclude the presence or addition of one or more other features, integers, actions, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described.

## Claims

1. A holder block (90) for retaining a temperature sensor (80) in a cooking apparatus (10) containing a cooking medium, comprising:
a base portion (110) configured to operatively engage at least a lower portion of the temperature sensor (80) and configured to operatively engage at least a lower portion of at least one heating element (70, 72);
a cap portion (112) removably attachable to the base portion (110), the cap portion (112) being configured to operatively engage at least an upper portion of the temperature sensor (80) and configured to operatively engage at least an upper portion of the at least one heating element (70, 72);
wherein the base portion (110) and cap portion (112) are moveable relative to each other such that movement of the base portion (110) and cap portion (112) toward each other provides a first clamping action on the at least one heating element (70, 72) and a second clamping action on the temperature sensor (80) to define a clamped position of the holder block (90),
the holder block being **characterized in that**, when in the clamped position, the base portion (110) and cap portion (112) provide a plurality of conductive thermal paths between the at least one heating element (70, 72) and the temperature sensor (80) and define a plurality of apertures (220, 222, 224, 226) providing a plurality of convective thermal paths between the at least one heating element (70, 72) and the temperature sensor (80) through the cooking medium.

2. The holder block of claim 1, wherein the base portion includes a T-shaped profile and/or wherein the cap portion includes a truncated T-shaped profile.

3. The holder block of any preceding claim, wherein:
the base portion (110) includes a bottom central member (120) and first and second legs (122, 124) extending from opposite sides of the bottom central member (120), the bottom central member (120) including a lower channel (130) and a bottom probe groove (160) configured to operatively engage at least a portion of the temperature sensor (80), the first and second legs (122, 124) including first and second bottom element grooves (162, 164), respectively, each configured to operatively engage at least a portion of first and second heating elements (70, 72), respectively;
the cap portion (112) includes a top central member (170) and first and second arms (172, 174) extending from opposite sides of the top central member (170), the top central member (170) including an upper channel (180) and a top probe groove (210) configured to operatively engage at least a portion of the temperature sensor (80) and located opposite the bottom probe groove (160), the first and second arms (172, 174) including first and second top element grooves (212, 214) located opposite the first and second bottom element grooves (162, 164), respectively, each configured to operatively engage at least a portion of the first and second heating elements (70, 72), respectively;
wherein the base portion (110) and cap portion (112) are moveable relative to each other such that movement of the base portion (110) and cap portion (112) toward each other provides a clamping action on the first heating element (70) via the first top and bottom element grooves (212, 162), a clamping action on the second heating element (72) via the second top and bottom element grooves (214, 164), and a clamping action on the temperature sensor (80) via the top and bottom probe grooves (210, 160).

4. The holder block of claim 3, wherein the base portion and cap portion are configured to provide a plurality of conductive thermal paths between the first and second heating elements and the temperature sensor.

5. The holder block of claim 3 or 4, wherein the lower and/or upper channels define a plurality of apertures configured to provide a plurality of convective thermal paths between the first and second heating elements and the temperature sensor through a cooking medium.

6. The holder block of claim 3, 4 or 5, wherein the upper and lower channels are configured to collectively define a passageway for receiving at least a portion of the temperature sensor.

7. The holder block of claim 3, 4, 5 or 6, wherein the bottom probe groove is centered along a width of the bottom central member and/or wherein the top probe groove is centered along a width of the top central member.

8. The holder block of claim 3, 4, 5, 6 or 7, wherein the top central member is shorter than the bottom central member.

9. The holder block of claim 3, 4, 5, 6, 7 or 8, wherein the bottom probe groove and/or top probe groove is configured to position the temperature sensor ¼ · 25,4 mm from the first and/or second heating element and/or wherein the top probe groove is configured to position the temperature sensor ¼ · 25,4 mm from a top surface of the cap portion.

10. A cooking apparatus comprising:
a fry pot;
first and second heating elements configured to heat a cooking medium in the fry pot;
the holder block of any preceding claim clamped over the first and second heating elements;
a high limit temperature sensor including a sensing element retained by the holder block and that provides a signal indicative of a temperature in the fry pot;
a high limit module configured to selectively decouple the first and second heating elements from an energy source in response to the signal indicating the temperature has exceeded a threshold temperature defining a hard trip condition; and
a controller configured to selectively regulate the first and second heating elements in response to the signal indicating the temperature is approaching the threshold temperature.

11. The cooking apparatus of claim 10, wherein the sensing element is positioned to sense a temperature greater than an actual temperature of the cooking medium.

12. The cooking apparatus of claim 11, wherein the sensing element is positioned to sense a temperature between [(40-32) · 5/9]°C and [(50-32) · 5/9]°C greater than the actual temperature of the cooking medium.

13. The cooking apparatus of any of claims 10-12, wherein the sensing element is positioned ¼ · 25,4 mm from the first and/or second heating element and/or wherein the sensing element is positioned ¼ · 25,4 mm from a top surface of the cap portion.

14. A method of controlling a temperature in a cooking apparatus (10), comprising:
clamping a holder block (90) retaining a temperature sensor (80) over first and second heating elements (70, 72) of the cooking apparatus (10), the holder block being the holder block of any preceding claim 1-9;
sensing, via the temperature sensor (80), a sensed temperature resulting from heat transfer from a cooking medium in the cooking apparatus (10) and from each of the first and second heating elements (70, 72);
comparing the sensed temperature to a threshold temperature;
in response to the sensed temperature being equal to or greater than the threshold temperature, deactivating the first and second heating elements (70, 72); and
in response to the sensed temperature approaching the threshold temperature, regulating at least one of the first or second heating elements (70, 72).

15. The method of claim 14, wherein sensing the sensed temperature includes providing conductive thermal paths to a sensing element of the temperature sensor and/or wherein sensing the sensed temperature includes providing convective thermal paths to a sensing element of the temperature sensor.

## Patentansprüche

1. Halteblock (90) zum Halten eines Temperatursensors (80) in einem Kochgerät (10), das ein Kochmedium enthält, aufweisend:
einen Basisabschnitt (110), der so konfiguriert ist, dass er mit wenigstens einem unteren Abschnitt des Temperatursensors (80) in Wirkverbindung kommt, und der so konfiguriert ist, dass er mit wenigstens einem unteren Abschnitt von wenigstens einem Heizelement (70, 72) in Wirkverbindung kommt;
einen Abdeckabschnitt (112), der abnehmbar an dem Basisabschnitt (110) angebracht werden kann, wobei der Abdeckabschnitt (112) so konfiguriert ist, dass er mit wenigstens einem oberen Abschnitt des Temperatursensors (80) in Wirkverbindung kommt, und der so konfiguriert ist, dass er mit wenigstens einem oberen Abschnitt des wenigstens einen Heizelements (70, 72) in Wirkverbindung kommt;
wobei der Basisabschnitt (110) und der Abdeckabschnitt (112) relativ zueinander beweglich sind, so dass eine Bewegung des Basisabschnitts (110) und des Abdeckabschnitts (112) aufeinander zu eine erste Klemmwirkung auf das wenigstens eine Heizelement (70, 72) und eine zweite Klemmwirkung auf den Temperatursensor (80) bewirkt, um eine geklemmte Position des Halteblocks (90) zu definieren,
wobei der Halteblock **dadurch gekennzeichnet ist, dass** der Basisabschnitt (110) und der Abdeckabschnitt (112), wenn sie sich in der geklemmten Position befinden, eine Mehrzahl von leitenden thermischen Pfaden zwischen dem wenigstens einen Heizelement (70, 72) und dem Temperatursensor (80) bereitstellen und eine Mehrzahl von Öffnungen (220, 222, 224, 226) definieren, die eine Mehrzahl von konvektiven thermischen Pfaden zwischen dem wenigstens einen Heizelement (70, 72) und dem Temperatursensor (80) durch das Kochmedium bereitstellen.

2. Halteblock nach Anspruch 1, wobei der Basisabschnitt ein T-förmiges Profil aufweist und / oder wobei der Abdeckabschnitt ein verkürztes T-förmiges Profil aufweist.

3. Halteblock nach einem der vorhergehenden Ansprüche, wobei:
der Basisabschnitt (110) ein unteres zentrales Element (120) und einen ersten und einen zweiten Schenkel (122, 124) aufweist, die sich von gegenüberliegenden Seiten des unteren zentralen Elements (120) erstrecken, wobei das untere zentrale Element (120) einen unteren Kanal (130) und eine untere Sondennut (160) aufweist, die so konfiguriert ist, dass sie mit wenigstens einem Abschnitt des Temperatursensors (80) in Wirkverbindung kommt, wobei der erste und der zweite Schenkel (122, 124) jeweils eine erste bzw. eine zweite untere Elementnut (162, 164) aufweisen, die jeweils so konfiguriert sind, dass sie mit wenigstens einem Abschnitt des ersten bzw. des zweiten Heizelements (70, 72) in Wirkverbindung kommen;
wobei der Abdeckabschnitt (112) ein oberes zentrales Element (170) und einen ersten und einen zweiten Arm (172, 174) aufweist, die sich von gegenüberliegenden Seiten des oberen zentralen Elements (170) erstrecken, wobei das obere zentrale Element (170) einen oberen Kanal (180) und eine obere Sondennut (210) aufweist, die so konfiguriert ist, dass sie mit wenigstens einem Abschnitt des Temperatursensors (80) in Wirkverbindung kommt, und die der unteren Sondennut (160) gegenüberliegend angeordnet ist, wobei der erste und der zweite Arm (172, 174) eine erste und eine zweite obere Elementnut (212, 214) aufweisen, die jeweils der ersten bzw. der zweiten unteren Elementnut (162, 164) gegenüberliegend angeordnet sind, und die jeweils so konfiguriert sind, dass sie mit wenigstens einem Abschnitt des ersten bzw. des zweiten Heizelements (70, 72) in Wirkverbindung kommen;
wobei der Basisabschnitt (110) und der Abdeckabschnitt (112) relativ zueinander beweglich sind, so dass eine Bewegung des Basisabschnitts (110) und des Abdeckabschnitts (112) aufeinander zu eine Klemmwirkung auf das erste Heizelement (70) über die erste obere und untere Elementnut (212, 162), eine Klemmwirkung auf das zweite Heizelement (72) über die zweite obere und untere Elementnut (214, 164) und eine Klemmwirkung auf den Temperatursensor (80) über die obere und untere Sondennut (210, 160) bewirkt.

4. Halteblock nach Anspruch 3, wobei der Basisabschnitt und der Abdeckabschnitt so konfiguriert sind, dass sie eine Mehrzahl von leitenden thermischen Pfaden zwischen dem ersten und dem zweiten Heizelement und dem Temperatursensor bereitstellen.

5. Halteblock nach Anspruch 3 oder 4, wobei die unteren und / oder oberen Kanäle eine Mehrzahl von Öffnungen definieren, die so konfiguriert sind, dass sie eine Mehrzahl von konvektiven thermischen Pfaden zwischen dem ersten und dem zweiten Heizelement und dem Temperatursensor durch ein Kochmedium bereitstellen.

6. Halteblock nach Anspruch 3, 4 oder 5, wobei der obere und der untere Kanal so konfiguriert sind, dass sie gemeinsam einen Durchgang zur Aufnahme wenigstens eines Abschnitts des Temperatursensors bilden.

7. Halteblock nach Anspruch 3, 4, 5 oder 6, wobei die untere Sondennut entlang einer Breite des unteren zentralen Elements zentriert ist und / oder wobei die obere Sondennut entlang einer Breite des oberen zentralen Elements zentriert ist.

8. Halteblock nach Anspruch 3, 4, 5, 6 oder 7, wobei das obere zentrale Element kürzer ist als das untere zentrale Element.

9. Halteblock nach Anspruch 3, 4, 5, 6, 7 oder 8, wobei die untere Sondennut und / oder die obere Sondennut so konfiguriert ist, dass sie den Temperatursensor ¼ mal 25,4 mm von dem ersten und / oder dem zweiten Heizelement entfernt positioniert, und / oder wobei die obere Sondennut so konfiguriert ist, dass sie den Temperatursensor ¼ mal 25,4 mm von einer oberen Fläche des Abdeckabschnitts entfernt positioniert.

10. Kochgerät, aufweisend:
einen Frittiertopf;
ein erstes und ein zweites Heizelement, die so konfiguriert sind, dass sie ein Kochmedium in dem Frittiertopf erhitzen;
den Halteblock nach einem der vorhergehenden Ansprüche, wobei der Halteblock über das erste und das zweite Heizelement geklemmt ist;
einen Temperatursensor für einen oberen Grenzwert, der ein Sensorelement enthält, das von dem Halteblock gehalten wird und das ein Signal liefert, das eine Temperatur in dem Frittiertopf anzeigt;
ein Obergrenzenmodul, das so konfiguriert ist, dass es das erste und das zweite Heizelement als Reaktion auf das Signal, das anzeigt, dass die Temperatur eine Schwellentemperatur überschritten hat, die einen harten Auslösezustand definiert, selektiv von einer Energiequelle abkoppelt; und
ein Steuergerät, das so konfiguriert ist, dass es das erste und das zweite Heizelement als Reaktion auf das Signal, das anzeigt, dass sich die Temperatur der Schwellentemperatur nähert, selektiv reguliert.

11. Kochgerät nach Anspruch 10, wobei das Sensorelement so angeordnet ist, dass es eine höhere Temperatur als die tatsächliche Temperatur des Kochmediums erfasst.

12. Kochgerät nach Anspruch 11, wobei das Sensorelement so angeordnet ist, dass es eine Temperatur erfasst, die zwischen [(40-32) mal 5/9]°C und [(50-32) mal 5/9]°C höher als die tatsächliche Temperatur des Kochmediums ist.

13. Kochgerät nach einem der Ansprüche 10 bis 12, wobei das Sensorelement ¼ mal 25,4 mm von dem ersten und / oder von dem zweiten Heizelement entfernt angeordnet ist und / oder wobei das Sensorelement ¼ mal 25,4 mm von einer oberen Fläche des Abdeckabschnitts entfernt angeordnet ist.

14. Verfahren zum Steuern einer Temperatur in einem Kochgerät (10), aufweisend:
Klemmen eines Halteblocks (90), der einen Temperatursensor (80) hält, über ein erstes und ein zweites Heizelement (70, 72) des Kochgeräts (10), wobei der Halteblock der Halteblock nach einem der vorhergehenden Ansprüche 1 bis 9 ist;
Erfassen einer erfassten Temperatur durch den Temperatursensor (80), die sich aus der Wärmeübertragung von einem Kochmedium in dem Kochgerät (10) und von jedem der ersten und zweiten Heizelemente (70, 72) ergibt;
Vergleichen der erfassten Temperatur mit einer Schwellentemperatur;
als Reaktion darauf, dass die erfasste Temperatur gleich oder größer als die Schwellentemperatur ist, Deaktivieren des ersten und des zweiten Heizelements (70, 72); und
als Reaktion darauf, dass sich die erfasste Temperatur der Schwellentemperatur nähert, Regulieren wenigstens eines der ersten oder zweiten Heizelemente (70, 72).

15. Verfahren nach Anspruch 14, wobei das Erfassen der erfassten Temperatur das Bereitstellen von leitenden thermischen Pfaden zu einem Sensorelement des Temperatursensors aufweist und / oder wobei das Erfassen der erfassten Temperatur das Bereitstellen von konvektiven thermischen Pfaden zu einem Sensorelement des Temperatursensors aufweist.

## Revendications

1. Bloc de maintien (90) destiné à retenir un capteur de température (80) dans un appareil de cuisson (10) contenant un milieu de cuisson, comprenant :
une partie base (110) configurée pour venir en prise fonctionnelle avec au moins une partie inférieure du capteur de température (80) et configurée pour venir en prise fonctionnelle avec au moins une partie inférieure d'au moins un élément chauffant (70, 72) ;
une partie capuchon (112) pouvant être fixée de manière amovible à la partie base (110), la partie capuchon (112) étant configurée pour venir en prise fonctionnelle avec au moins une partie supérieure du capteur de température (80) et configurée pour venir en prise fonctionnelle avec au moins une partie supérieure de l'au moins un élément chauffant (70, 72) ;
dans lequel la partie base (110) et la partie capuchon (112) sont mobiles l'une par rapport à l'autre de sorte que le mouvement de la partie base (110) et de la partie capuchon (112) l'une vers l'autre exerce une première action de serrage sur l'au moins un élément chauffant (70, 72) et une deuxième action de serrage sur le capteur de température (80) pour définir une position serrée du bloc de maintien (90), le bloc de maintien étant **caractérisé en ce que**,
lorsqu'il est en position serrée, la partie base (110) et la partie capuchon (112) fournissent une pluralité de trajets thermiques conducteurs entre l'au moins un élément thermique (70, 72) et le capteur de température (80) et définissent une pluralité d'ouvertures (220, 222, 224, 226) fournissant une pluralité de trajets thermiques par convection entre l'au moins un élément chauffant (70, 72) et le capteur de température (80) à travers le milieu de cuisson.

2. Bloc de maintien selon la revendication 1, dans lequel la partie base inclut un profil en forme de T et/ou dans lequel la partie capuchon inclut un profil en forme de T tronqué.

3. Bloc de maintien selon une quelconque revendication précédente, dans lequel :
la partie base (110) inclut un élément central inférieur (120) et des première et seconde jambes (122, 124) s'étendant depuis des côtés opposés de l'élément central inférieur (120), l'élément central inférieur (120) incluant un canal inférieur (130) et une rainure de sonde inférieure (160) configurée pour venir en prise fonctionnelle avec au moins une partie du capteur de température (80), les première et seconde jambes (122, 124) incluant des première et seconde rainures d'élément inférieur (162, 164), respectivement, chacune configurée pour venir en prise fonctionnelle avec au moins une partie des premier et second éléments chauffants (70, 72), respectivement ;
la partie capuchon (112) inclut un élément central supérieur (170) et des premier et second bras (172, 174) s'étendant depuis des côtés opposés de l'élément central supérieur (170), l'élément central supérieur (170) incluant un canal supérieur (180) et une rainure de sonde supérieure (210) configurée pour venir en prise fonctionnelle avec au moins une partie du capteur de température (80) et située à l'opposé de la rainure de sonde inférieure (160), les premier et second bras (172, 174) incluant des première et seconde rainures d'élément supérieur (212, 214) situées à l'opposé des première et seconde rainures d'élément inférieur (162, 164), respectivement, chacune configurée pour venir en prise fonctionnelle avec au moins une partie des premier et second éléments chauffants (70, 72), respectivement ;
dans lequel la partie base (110) et la partie capuchon (112) sont mobiles l'une par rapport à l'autre de sorte que le mouvement de la partie base (110) et de la partie capuchon (112) l'une vers l'autre exerce une action de serrage sur le premier élément chauffant (70) via les premières rainures des éléments supérieur et inférieur (212, 162), une action de serrage sur le second élément chauffant (72) via les secondes rainures des éléments supérieur et inférieur (214, 164), et une action de serrage sur le capteur de température (80) via les rainures de sonde supérieure et inférieure (210, 160).

4. Bloc de maintien selon la revendication 3, dans lequel la partie base et la partie capuchon sont configurées pour fournir une pluralité de trajets thermiques conducteurs entre les premier et second éléments chauffants et le capteur de température.

5. Bloc de maintien selon la revendication 3 ou 4, dans lequel les canaux inférieur et/ou supérieur définissent une pluralité d'ouvertures configurées pour fournir une pluralité de trajets thermiques par convection entre les premier et second éléments chauffants et le capteur de température à travers un milieu de cuisson.

6. Bloc de maintien selon la revendication 3, 4 ou 5, dans lequel les canaux supérieur et inférieur sont configurés pour définir collectivement une voie de passage pour recevoir au moins une partie du capteur de température.

7. Bloc de maintien selon la revendication 3, 4, 5 ou 6, dans lequel la rainure de sonde inférieure est centrée le long d'une largeur de l'élément central inférieur et/ou dans lequel la rainure de sonde supérieure est centrée le long d'une largeur de l'élément central supérieur.

8. Bloc de maintien selon la revendication 3, 4, 5, 6 ou 7, dans lequel l'élément central supérieur est plus court que l'élément central inférieur.

9. Bloc de maintien selon la revendication 3, 4, 5, 6, 7 ou 8, dans lequel la rainure de sonde inférieure et/ou la rainure de sonde supérieure est configurée pour positionner le capteur de température à 1/4 • 25,4 mm du premier et/ou du second élément chauffant et/ou dans lequel la rainure de sonde supérieure est configurée pour positionner le capteur de température à 1/4 • 25,4 mm d'une surface supérieure de la partie capuchon.

10. Appareil de cuisson comprenant :
un récipient à friture ;
des premier et second éléments chauffants configurés pour chauffer un milieu de cuisson dans le récipient à friture ; le bloc de maintien selon une quelconque revendication précédente serré sur les premier et second éléments chauffants ;
un capteur de température à limite élevée incluant un élément de détection retenu par le bloc de maintien et qui fournit un signal indiquant une température dans le récipient à friture ;
un module à limite élevée configuré pour découpler de manière sélective les premier et second éléments chauffants d'une source d'énergie en réponse au signal indiquant que la température a dépassé une température seuil définissant une condition de déclenchement difficile ; et
un dispositif de commande configuré pour réguler de manière sélective les premier et second éléments chauffants en réponse au signal indiquant que la température approche la température seuil.

11. Appareil de cuisson selon la revendication 10, dans lequel l'élément de détection est positionné pour détecter une température supérieure à une température effective du milieu de cuisson.

12. Appareil de cuisson selon la revendication 11, dans lequel l'élément de détection est positionné pour détecter une température de [(40-32) • 5/9]°C à [(50-32) • 5/9]°C supérieure à la température effective du milieu de cuisson.

13. Appareil de cuisson selon l'une quelconque des revendications 10 à 12, dans lequel l'élément de détection est positionné à 1/4 • 25,4 mm du premier et/ou du second élément chauffant et/ou dans lequel l'élément de détection est positionné à 1/4 • 25,4 mm d'une surface supérieure de la partie capuchon.

14. Procédé de régulation d'une température dans un appareil de cuisson (10), consistant :
à serrer un bloc de maintien (90) retenant un capteur de température (80) sur des premier et second éléments chauffants (70, 72) de l'appareil de cuisson (10), le bloc de maintien étant le bloc de maintien de l'une quelconque des revendications précédentes 1 à 9,
à détecter, par l'intermédiaire du capteur de température (80), une température détectée résultant d'un transfert thermique depuis un milieu de cuisson dans l'appareil de cuisson (10) et depuis chacun des premier et second éléments chauffants (70, 72) ;
à comparer la température détectée à une température seuil ;
si la température détectée est égale ou supérieure à la température seuil, à désactiver les premier et second éléments chauffants (70, 72) ; et
si la température détectée approche la température seuil, à réguler au moins l'un du premier et du second élément chauffant (70, 72).

15. Procédé selon la revendication 14, dans lequel la détection de la température détectée inclut la fourniture de trajets thermiques conducteurs à un élément de détection du capteur de température et/ou dans lequel la détection de la température détectée inclut la fourniture de trajets thermiques par convection à un élément de détection du capteur de température.
